# EUROPÄISCHE PATENTSCHRIFT

(11) **EP 0 757 186 B1**
(45) Veröffentlichungstag und Bekanntmachung des Hinweises auf die Patenterteilung: **03.09.2003**
(21) Anmeldenummer: 96112093.8
(22) Anmeldetag: 26.07.1996
(51) Int. Cl.: F16C 17/06

(54) **Gleitlager-Gleitschuh mit einer Druckfeder**
Sliding pad with a compression spring for a plain bearing
Patin à glissement muni d'un ressort de compression pour palier lisse

(43) Veröffentlichungstag der Anmeldung: 05.02.1997
(73) Patentinhaber: RENK AKTIENGESELLSCHAFT, 86159 Augsburg (DE)
(72) Erfinder: Wyndorps, Paul, Dr.-Ing., 41061 Mönchengladbach (DE); Negwer, Bernd, 56626 Andernach (DE); Schmitz, Albert K., 30966 Hemmingen (DE)
(74) Vertreter: Schober, Stefan, Dipl.-Ing.

(56) Entgegenhaltungen:
- EP-A- 0 080 804
- WO-A-91/19112
- WO-A-95/28574
- DE-A- 1 775 557
- DE-C- 434 151
- DE-C- 667 761

## Beschreibung

Die Erfindung betrifft ein Axialgleitlager gemäß dem Oberbegriff von Anspruch 1.

### Stand der Technik:

DE 43 43 965 A zeigt kreiszylindrische Gleitschuhe mit einer sie stützenden Tellerfeder.

US 1 117 504 A zeigt kreiszylindrische Gleitschuhe mit einer Gleitfläche auf einer Stirnseite und einer kugelförmigen Stützfläche auf der anderen Stirnseite.

US 3 142 519 A zeigt segmentförmige Gleitschuhe.

DE 35 22 037 A zeigt ein Radialgleitlager mit radial wirkenden, kippbar angeordneten Gleitschuhen.

EP 0 080 804 A zeigt ein Axialdrucklager mit einem kreisförmigen Träger welcher einen ringförmigen, hinterschnittenen Schlitz aufweist. In diesen Schlitz sind ringsegment-förmige Nuteingriffsteile von Gleitkörpern eingesetzt, die einen ringsegment-förmigen Gleitteil außerhalb des ringförmigen Schlitzes aufweisen. Der Gleitteil hat auf seiner vom Nuteingriffsteil abgewandten Stirnseite eine Gleitfläche in Form einer auf den Gleitteil aufgebrachten dünnen Gleitschicht. Der Gleitteil und der Nuteingriffsteil bestehen zusammen aus einem einteiligen Element.

DE 434 151 C zeigt ein Axialdrucklager mit kreisbogensegmentförmigen Gleitkörpern, die einen kreisbogen-segmentförmigen Fußteil haben, der als eine im wesentlichen bogenförmige Blattfeder zur Aufnahme von Axialbelastungen ausgebildet ist und einen Gleitteil trägt, welcher in Lagerumfangsrichtung kürzer als der Fußteil ist.

Die gattungsbildende WO 95 28 574 A zeigt kreiszylindrische Gleitkörper mit einer Umfangsnut, welche ihn in einen Gleitteil und eine tellerförmige Druckfeder unterteilt, die durch einen zentralen Verbindungsteil miteinander verbunden sind und zusammen aus einem einstückigen Element bestehen. Der Gleitteil ist auf seiner von der tellerförmigen Druckfeder abgewandten Stirnseite mit einer Gleitfläche versehen, die aus einem auf den Gleitteil aufgebrachten dünnen Schicht aus gleitfähigem Material besteht. Der die Tellerfeder aufweisende Teil der Gleitkörper sitzt in Bohrungen eines Tragkörpers und wird darin von der Bohrungswand radial fixiert.

### Beschreibung der Erfindung:

Durch die Erfindung soll die Aufgabe gelöst werden, ein Axialgleitlager derart auszubilden, daß es preisgünstiger in der Herstellung ist und weniger Teile montiert werden müssen. Weiter sollen die benach barte gleitschuhe sich nicht gegenseitig bei Kipp- bzw. Schwenkbewegungen stören.

Diese Aufgabe wird gemäß der Erfindung durch die Merkmale von Anspruch 1 gelöst.

Weitere Merkmale der Erfindung sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen:
Fig. 1 schematisch einen Axialschnitt durch einen kreiszylindrischen nicht erfindungsgemäßen Gleitschuh für ein Axiallager,
Fig. 2 einen Axialschnitt durch einen kreiszylindrischen Gleitschuh für ein Axiallager,
Fig. 3 einen Axialschnitt durch einen im Querschnitt kreisrunden Gleitschuh für ein Axiallager gemäß ,
Fig. 4 einen Axialschnitt durch ein kombiniertes Axial- und Radial-Gleitlager mit Gleitschuhen im Axiallagerteil nach einer der Fig. 1, 2 oder 3.

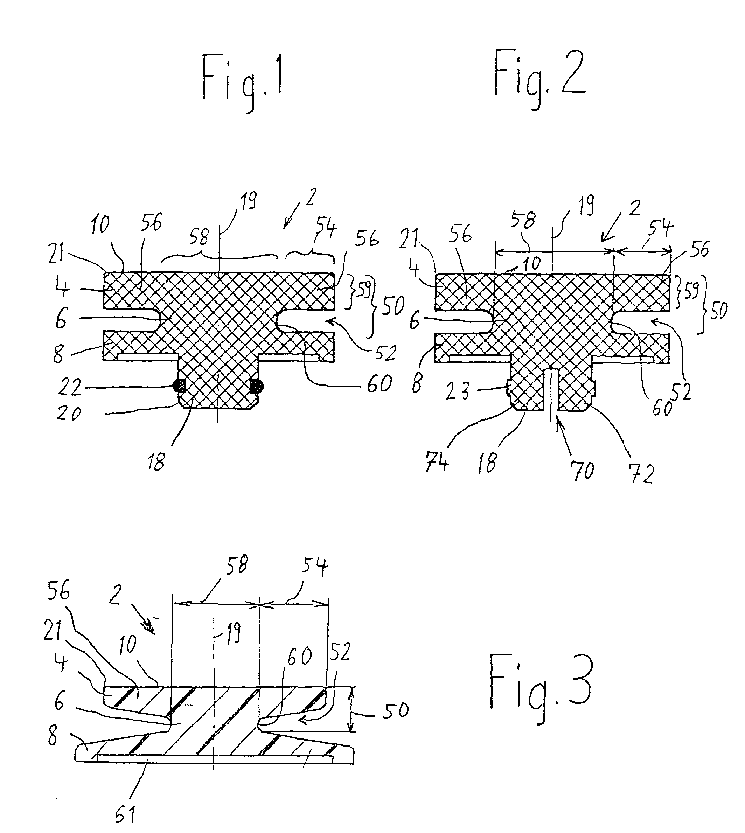

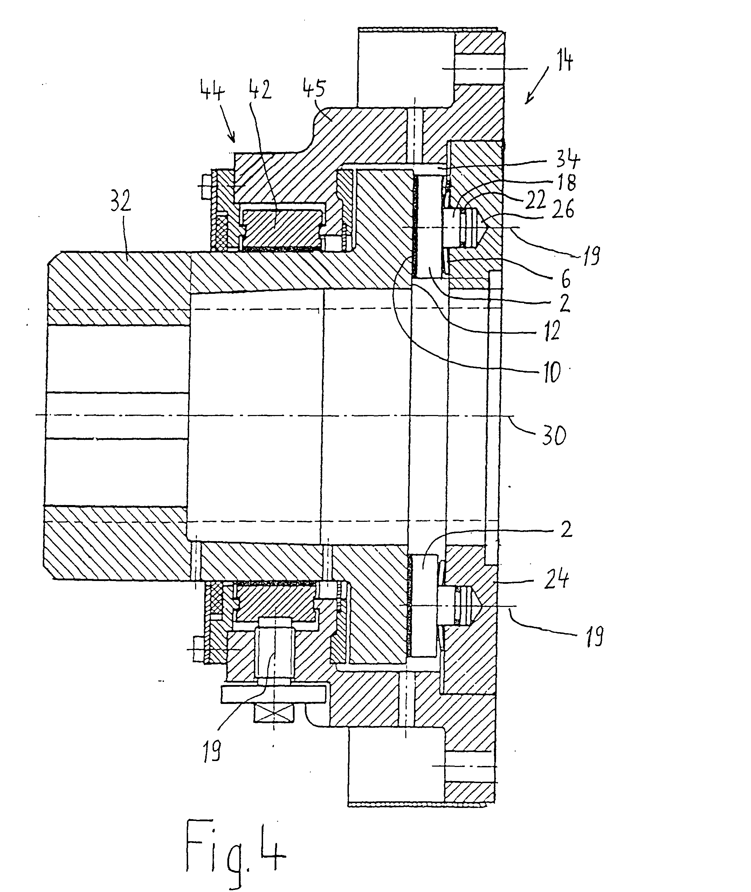

Der in Fig. 1 dargestellte Gleitschuh 2 enthält in einem einteiligen Materialkörper, aus Kunststoff, einen Gleitteil 4 (sliding pad), einen Halterteil 6 für das Gleitteil 4, eine tellerförmige Druckfeder 8 zum Ausgleich von Höhendifferenzen zwischen einer Gleitfläche 10 auf einer Stirnseite des Gleitteils 4 und einer ihr gegenüberliegenden und relativ zu ihr rotierenden Anlauffläche 12 (Fig. 4) eines Axial-Gleitlagers 14, und einen axial zu einer Gleitschuh-Mittelachse 19 angeordneten Zapfen 18 auf der von der Gleitfläche 10 abgewandten Gleitschuhseite. Der Umfangsrand 21 der Gleitfläche 10 ist abgeflacht. In einer Ringnut 20 des Zapfens 18 befindet sich ein radial federelastischer Führungsring 22 zur schwenkbaren Befestigung des Gleitschuhes 2 in einer zylindrischen Öffnung 26 eines Tragkörpers 24 des Lagers von Fig. 4. In Fig. 4 ist eine Vielzahl von Gleitschuhen 2 ringförmig um eine Lagerdrehachse 30 herum angeordnet. Bei Lagerstillstand liegen die Gleitflächen 10 der Gleitschuhe 2 an der Anlauffläche 12 an, welche an einem Lagerstützkörper 32 ringförmig in einer Ebene radial zur Lagerdrehachse 30 0 angeordnet ist. Bei Rotation des Lagerstützkörpers 32 relativ zu den Gleitschuhen 2 des Tragkörpers 24 um die Lagerdrehachse 30 wird Schmierstoff aus dem zwischen ihnen gebildeten Schmierstoffraum 34 zwischen die Gleitflächen 10 der Gleitschuhe 2 und die Anlauffläche 12 gedrängt. Dadurch werden die Gleitschuhe 2 relativ zur Lagerdrehachse 30 0 aus ihrer zuvor achsparallelen Lage in eine Schräglage gekippt, so daß zwischen den Gleitflächen 10 und der Anlauffläche 12 ein keilförmiger Schmierspalt mit Schmierstoff entsteht. Während der Rotation des Lagers entsteht im Schmierspalt zwischen Gleitfläche 10 und Anlauffläche 12 Druck und Wärme. Damit die druck- und temperaturabhängigen Verformungen des Gleitschuhes mit Sicherheit keine konkave Form der Gleitfläche 10 erzeugen können, wird die Gleitfläche 10 der Gleitschuhe 2 bei der Produktion mit einer kleinen konvexen Balligkeit von ca. 10 µm hergestellt. Die Größe der Balligkeit und deren Radius verändert sich jedoch während des Lagerbetriebes in Abhängigkeit von Druck und Temperatur. Im Betrieb des Lagers entsteht normalerweise in der Gleitfläche 10 eine höhere Temperatur als in den unter der Gleitfläche 10 tiefer gelegenen Bereichen des Gleitschuhes 2.

Einer der beiden Tragkörper 24 oder Lagerstützkörper 32 ist nicht-rotierbar und der betreffende andere ist rotierbar angeordnet. Bei dem Vertikal-Lager von Fig. 4 ist der Tragkörper 24 nicht-rotierbar und der Lagerstützkörper 32 (Läufer), welcher mit einer Welle drehfest verbindbar ist, rotierbar angeordnet.

Fig. 4 zeigt ein kombiniertes Axial-Gleitlager 14 und Radial-Gleitlager 44, welche gemeinsam den Lagerstützkörper 32 und ein Lagergehäuse 45 haben.

Gemäß der Erfindung ist der Außenumfang 50 des Gleitschuhes mit einer sich um den gesamten Umfang ringförmig erstreckenden Hinterschneidung oder Umfangs-Ausnehmung 52 derart versehen, daß sich der über der Ausnehmung 52 liegende Gleitschuh-Randbereich 56 mit dem zugehörigen Randbereich 54 der Gleitfläche 10 in Richtung zur Umfangs-Ausnehmung 52 hin abbiegen kann und dadurch die Balligkeit der Gleitfläche 10 konvex vergrößert, wenn im Betrieb des Lagers auf der Gleitfläche 10 eine höhere Temperatur als darunter im inneren des Gleitschuhes 2 entsteht. Die temperaturabhängige konvex ballige Verformung der Gleitfläche 10 beginnt am Gleitschuh-Zentralbereich 58 am Grund 60 der Ausnehmung 52. Dagegen kann sich eine bei der Produktion mechanisch hergestellte konvexe Balligkeit der Gleitfläche 10 über ihre gesamte Ausdehnung erstrecken. Die axiale Dicke 59 des Randabschnittes 56 über der Umfangs-Ausnehmung 52 ist wesentlich kleiner als die sich axial darüber hinaus erstreckende axiale Dicke 50 des Gleitschuhes 2 in seinem Zentrumsbereich 58 radial innerhalb der Ausnehmung 52. Die axiale Dicke 50 im Zentrumsbereich ist in den Zeichnungen identisch mit der Höhe des Außenumfangs 50 des Gleitschuhes 2, enthaltend den Gleitteil 4 und den Halterteil 6.

Die ringförmige Umfangs-Ausnehmung 52 gibt der tellerförmigen Druckfeder 8 axialen Federspielweg relativ zum Gleitelement 4.

Bei der Ausführungsform nach Fig. 2 ist der radial federelastische Führungsring 22 durch einen mit dem Gleitschuh 2 einteiligen Ringbund 23 am Zapfen 18 ersetzt. Ferner ist der Zapfen 18 von Fig. 2 in Längsrichtung geschlitzt, vorzugsweise durch einen diametral vollständig durch ihn hindurchgehenden und sich axial über mehr als 3/4 seiner Länge erstreckenden Schlitz 70. Dadurch ist der Zapfen 18 auf zwei (oder mehr) fingerartige Zapfenteile 72 und 74 aufgeteilt, die radial federelastisch gegeneinander biegbar sind. Diese Elastizität ersetzt die Elastizität des Führungsringes 22. Der Führungsring 22 oder der entsprechende Ringbund 23 sind nötig, damit der Gleitschuh innerhalb der ihn aufnehmenden Öffnung 26 des Tragkörpers 24 radial und axial fixiert wird und die genannten Kippbewegungen machen kann. In den übrigen Teilen ist der Gleitschuh von Fig. 2 gleich ausgebildet wie der Gleitschuh 2 in Fig. 1, weshalb diese übereinstimmenden Teile hier nicht nochmals beschrieben werden.

Fig. 3 zeigt eine einteilige Ausführungsform, welche keinen Zapfen 18 und keinen Führungsring 22 oder Ringbund 23 hat, und deshalb auf andere Weise in einem Gleitlager positioniert werden muß. Wie Fig. 3 zeigt, kann die Umfangs-Ausnehmung 52 radial von innen nach außen eine keilförmig zunehmende axiale Höhe haben, damit der Gleitschuh-Randbereich 56 und/oder die tellerförmige Feder 8 eine keilförmig radial nach außen hin abnehmende Dicke haben. Dadurch läßt sich die mechanische Biegespannung bei Belastung des Gleitschuhes 2 gleichmäßiger im Gleitteil 4 und/oder in der Druckfeder 8 verteilen. Gleichzeitig wird Material eingespart. Zur Verbesserung der Federwirkung und ebenfalls zur Materialeinsparung kann die tellerförmige Druckfeder 8 auf ihrer Unterseite mit einer Aushöhlung 61 versehen sein. Ein weiteres besonderes Merkmal der Ausführungsform von Fig. 3 ist, daß die Tellerfeder 8 einen größeren Durchmesser hat als die übrigen Teile des Gleitschuhes 2 und deshalb über diese übrigen Teile radial übersteht. Dadurch hat der mit der Gleitfläche 10 versehene Gleitteil 4 einen größeren Zwischenraum zu benachbarten Gleitschuhen 2, was die Zufuhr und Abfuhr von Schmierstoff erleichtert und dadurch die Kühlung verbessert. Ferner hält die überstehende Druckfeder 8 benachbarte Gleitschuhe auf Abstand vom Gleitteil 4 , so daß letzteres relativ zur Druckfeder 8 die genannten Kippbewegungen oder Schwenkbewegungen machen kann, ohne von benachbarten Gleitschuhen 2 gestört zu werden.

Die Gleitfläche 10 kann eine auf den Gleitteil 4 des Gleitschuhs 2 aufgebrachte dünne Schicht aus einem anderen bekannten Material als die übrigen Teile des Gleitschuhes 2 sein. Eine solche zusätzliche Schicht für die Gleitfläche 10 ist jedoch dann nicht erforderlich, wenn der Gleitschuh 2 insgesamt oder zumindest sein Gleitteil 4 aus einem Kunststoff besteht, welcher gute Gleiteigenschaften hat. Die Schicht muß aus einem Material mit guten Gleiteigenschaften bestehen, z.B. einem Kunststoff oder Weißmetall.

## Patentansprüche

1. Axialgleitlager mit folgenden Merkmalen:
eine Vielzahl von Gleitschuhen (2), welche ringförmig um eine Lagerdrehachse angeordnet sind; die Gleitschuhe (2) sind an ihrem Außenumfang mit einer ringförmigen Umfangs-Ausnehmung (52) versehen, welche die Gleitschuhe (2) in einen Gleitteil (4), der stirnseitig mit einer Gleitfläche (10) versehen ist, und eine tellerförmige Druckfeder (8) auf der von der Gleitfläche (10) abgewandten Stirnseite des Gleitteils (4) unterteilt; die tellerförmige Druckfeder (8) hat einen Durchmesser, der größer ist als der Durchmesser des Gleitteils (4) und ragt deshalb radial über den Gleitteil (4) hinaus; der Gleitteil (4), die tellerförmige Druckfeder (8) und ein diese beiden im Zentrum der Ausnehmung (52) verbindender Verbindungsteil (6) bestehen zusammen aus einem einteiligen Materialstück;
**dadurch gekennzeichnet,**
**daß** das einteilige Materialstück (4,6,8) aus Kunststoff besteht; daß die Gleitschuhe (2) nebeneinander derart angeordnet sind, daß jede radial hinausragende Druckfeder (8) benachbarte Gleitschuhe (2) auf Abstand vom Gleitteil (4) hält.

2. Axialgleitlager nach Anspruch 1,
**dadurch gekennzeichnet,**
**daß** der Kunststoff ein Kunststoff mit guten Gleiteigenschaften ist und auch die Gleitfläche (10) der Gleitschuhe (2) bildet.

3. Axialgleitlager nach Anspruch 1,
**dadurch gekennzeichnet,**
**daß** die Gleitfläche (10) aus einer auf die Gleitteile (4) aufgebrachten dünnen Schicht aus einem anderen Material als das einteilige Materialstück besteht.

## Claims

1. Axial plain bearing having the following features:
a multiplicity of sliding shoes (2) which are arranged annularly about a bearing axis of rotation; the sliding shoes (2) are provided at their periphery with an annular peripheral recess (52) which subdivides the sliding shoe (2) into a sliding pad (4), provided with a sliding surface (10) on an end face, and a disc-shaped compression spring (8) on that end face of the sliding pad (4) which is directed away from the sliding surface (10); the disc-shaped compression spring (8) has a diameter greater than the diameter of the sliding pad (4) and therefore protrudes radially beyond the sliding pad (4); the sliding pad (4), the disc-shaped compression spring (8) and a connecting part (6), connecting these two in the centre of the recess (52), together consist of an integral piece of material;
***characterised in that*** the integral piece of material (4, 6, 8) consists of plastic; **in that** the sliding shoes (2) are arranged side by side in such a way that each radially protruding compression spring (8) keeps adjacent sliding shoes (2) at a distance from the sliding pad (4).

2. Axial plain bearing according to Claim 1,
***characterised in that*** the plastic is a plastic having good sliding properties and also forms the sliding surface (10) of the sliding shoes (2).

3. Axial plain bearing according to Claim 1,
***characterised in that*** the sliding surface (10) consists of a thin layer, of a different material than the integral piece of material, applied to the sliding pads (4).

## Revendications

1. Palier lisse de butée présentant les caractéristiques suivantes:
une multiplicité de patins de glissement (2), qui sont disposés en cercle autour d'un axe de rotation du palier; les patins de glissement (2) sont, à leur surface périphérique extérieure, pourvus d'un évidement périphérique (52) de forme annulaire, qui subdivise les patins de glissement (2) en une partie de glissement (4), qui est pourvue d'une surface de glissement (10) sur une face frontale, et un ressort de pression en forme de rondelle (8) sur la face frontale, tournée à l'opposé de la surface de glissement (10), de la partie de glissement (4); le ressort de pression en forme de rondelle (8) présente un diamètre qui est supérieur au diamètre de la partie de glissement (4), et fait par conséquent saillie radialement au-delà de la partie de glissement (4); la partie de glissement (4), le ressort de pression en forme de rondelle (8) et une partie de liaison (6) reliant les deux dans le centre de l'évidement (52) étant ensemble réalisés sous forme d'une pièce de matériau monobloc;
**caractérisé en ce que** la pièce de matériau monobloc (4, 6, 8) est réalisée en matière plastique; **en ce que** les patins de glissement (2) sont disposés l'un à côté de l'autre d'une manière telle, que chaque ressort de pression (8), qui fait saillie radialement, maintient des patins de glissement voisins (2) à distance de la partie de glissement (4).

2. Palier lisse de butée selon la revendication 1,
**caractérisé en ce que** la matière plastique est une matière plastique présentant de bonnes propriétés de glissement et forme également la surface de glissement (10) des patins de glissement (2).

3. Palier lisse de butée selon la revendication 1,
**caractérisé en ce que** la surface de glissement (10) est constituée par une mince couche d'un autre matériau que celui de la pièce de matériau monobloc, qui est appliquée sur les parties de glissement (4).
